(19) Europäisches Patentamt
European Patent Office
Office européen des brevets

(11) Publication number: **0 084 884**
**A2**

(12) # EUROPEAN PATENT APPLICATION

(21) Application number: **83100632.5**

(22) Date of filing: **25.01.83**

(51) Int. Cl.³: **F 16 D 3/62**

(30) Priority: **27.01.82 US 343329**

(43) Date of publication of application: **03.08.83**
**Bulletin 83/31**

(84) Designated Contracting States: **BE DE FR GB IT NL SE**

(71) Applicant: **E.I. DU PONT DE NEMOURS AND COMPANY, Legal Department 1007 Market Street, Wilmington Delaware 19898 (US)**

(72) Inventor: **Kutsch, Howard James, 2111 Dunhill Drive, Wilmington Delaware 19810 (US)**

(74) Representative: **von Kreisler, Alek, Dipl.-Chem. et al, Deichmannhaus am Hauptbahnhof, D-5000 Köln 1 (DE)**

(54) **Improved rotary elastic transmission means.**

(57) An improved elastic coupling for transmitting power from one shaft to another shaft comprising a driving shaft connected to hub member and a driven shaft connected to a rim member both of which are operably connected by a plurality of radially-positioned two-ended loop elastomeric-belt springs each mounted on a pair of swing arms which are radially spaced apart from one another and one of which is pivotally mounted on said rim member and the other pivotally mounted said hub member, each of said swing arms having elastomeric-belt spring support means at one end, at least one of said swing arm support means of each pair being eccentrically mounted on their respective rim member or hub member with respect to their swing arm pivot points and said pivot points being in fixed positions relative to the centerline of the driving and driven shafts.

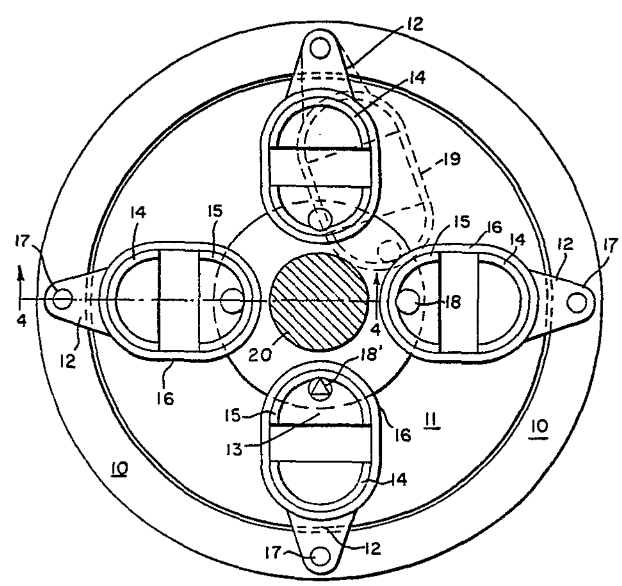


EP 0 084 884 A2

0084884

## TITLE

Improved Rotary Elastic Transmission Means

## BACKGROUND OF THE INVENTION

The present invention relates to an elastic coupling used in power trains to transmit power from a driving shaft to a driven shaft. Such couplings are commonly employed in machine tool applications and in certain automotive power trains. The elastic nature of such couplings provides shock-absorbing capability in applications wherein the power train is required to handle cyclical and/or intermittent power surges stemming from the power source or system demand. Both are common in the drive train of an internal combustion engine operating through a multigear transmission system as well as in the power train of piston-type or gas compressors.

Power transmission couplings of the present invention employ elastomeric means between the driving and the driven shafts of the coupling for shock absorption purposes. A preferred form of elastomeric means employs radially-positioned elastomeric-belt springs which join elements associated with the driving and the driven shafts. These elastomeric-belt springs can be formed by use of a molding process, by forming a closed-loop from a band of material or by laminating many layers of elastomeric material together. Another form of elastomeric means employs radially-positioned elastomeric links in place of the described closed-loop bands.

Typical disclosures which describe such couplings, include the following:

A. U.S.P. 2,540,703 discloses the use of radially-positioned links in a flexible

coupling. These links are formed of sheet metal arms which are joined via resilient bushings. The resilent bushings permit the individual arms to slightly rotate relative to each other upon the application of torque to the input shaft.

B. U.S.P. 3,748,868 discloses a flexible coupling employing radially-positioned flexible links which deflect upon the application of torque. These links are flat spring steel pieces which fit into radially-positioned slots.

C. French Patent No. 1,120,269 discloses the use of radially-positioned elastomeric-belt springs in a power transmission coupling application.

## BRIEF DESCRIPTION OF DRAWING

FIG. 1 is an elevation view of a prior-art coupling which employs elastomeric-belt springs for power transmitting and surge-damping means.

FIG. 2 is a cross-sectional view of the coupling apparatus of FIG. 1.

FIG. 3 is an elevation view of the elastic coupling of the present invention.

FIG. 4 is a cross-sectional view of a section of the elastic coupling shown in Fig. 3.

## SUMMARY OF THE INVENTION

The present invention is directed to an improved elastic coupling for transmitting power from one shaft to another shaft comprising a driving shaft connected to a hub member and a driven shaft connected to a rim member both of which are operably connected by a plurality of radially positioned two-ended loop elastomeric-belt springs each mounted

on a pair of swing arms which are radially spaced apart from one another and one of which is pivotally mounted on said rim member and the other pivotally mounted on said hub member, each of said swing arms having elastomeric-belt spring support means on one end, at least one of said swing arm support means of each pair being eccentrically mounted on their respective rim member or hub member with respect to their swing arm pivot points and said pivot points being in fixed positions relative to the centerline of the driving and driven shafts. Alternatively, each pair of said swing arm elastomeric-belt support means is eccentrically mounted on the rim member and hub member. Preferably, the pivot points comprise fulcrum-type pivots. Generally, the elastomeric-belt springs are made of a copolyetherester elastomer, preferably an oriented copolyetherester elastomer, and most preferably the copolyetherester is derived from an ester interchange reaction of terephthalic acid or ester thereof, poly(alkylene oxide) glycol, and aliphatic diol.

## DETAILED DESCRIPTION OF THE INVENTION

Referring to the drawing, FIGS. 1 and 2 show a typical prior-art coupling 1 joining driving shaft 2 with driven shaft 3 along centerline 4. A hub element 5 is mounted on driving shaft 2 and has hub support pins 6 mounted in uniformly-spaced angular positions around centerline 4. A rim element 7 is mounted on driven shaft 3 and it has rim support pins 8 mounted in uniformly-spaced angular positions around centerline 4 so that each of the rim support pins 8 is radially positioned adjacent to a hub support pin 6. Endless elastomeric-belt springs 9 join the hub support pins 6 with the rim support pins

8 and provide the means for transmitting power from driving shaft 2 to driven shaft 3. Such an arrangement provides for the cushioning of torsional upsets to or from the driving member while transmitting power.

The improved apparatus of the present invention is shown in FIG. 3 and FIG 4. This apparatus employs radially-positioned two-ended loop elastomeric-belt springs 16 which provide for cushioning any torsional upsets that may occur while power is transmitted from driving shaft 20 to driven shaft 21.

Important features of the improved apparatus shown in Figure 3 and Figure 4 are the pair of swing-arms 12 and 13 pivotally mounted on either the rim member 10 or the hub member 11 by means of rim support pin 17 or hub support pin 18. Rim swing arm 12 and hub swing arm 13 have rim swing arm elastomeric-belt spring support means 14 and hub swing arm elastomeric-belt spring support means 15 at one end of each swing arm. The belt spring support means can be a separate piece, such as a half round tube section, or it can be welded to the swing arm and the swing arm and belt spring support means can be integral. Either rim swing arm elastomeric-belt spring support 14 or hub elastomeric-belt spring supports 15 is eccentrically mounted on its respective rim member 10 or hub member 11 with respect to its swing arm pivot point. Preferably, both rim and hub swing arm elastomeric-belt spring supports 14 and 15 are eccentrically mounted. Thus the swing arms are designed and mounted on the rim and hub member in such a manner that the elastomeric-belt spring support means have their

nominal centers at locations remote from the rotational centers of the swing arms so that the elastomeric-belt spring support means are eccentrically mounted on the swing arms relative to the pivot points, i.e. rim support pin or hub support pin, for each of the swing arms. The rim support pin 17 and hub support pin 18 that function as pivot points can be formed by conventional means such as shafts with bushings, needle bearings and the like, or by use of a three-sided shaft 18', shown in FIG. 3. This three-sided shaft 18' provides a fulcrum type of pivot point.

Elastomeric-belt spring supports 14 and 15 support one loop end of each of the elastomeric-belt springs. As torque is applied, the centers of the elastomeric-belt springs are displaced rotationally, as shown by the dotted portion 19 in FIG. 3, causing each swing arm that is provided with an elastomeric belt-spring support to rotate slightly. This permitted degree of rotation eliminates the need for large full-cylinder pins and their associated hardware. In addition, shorter belts may be employed so that they can be positioned closer to the centerline of the drive train, and swing arms with hollow cores can be used, resulting in both volume and weight reductions. These reductions, in turn, permit operation with lower inertial and flywheel-type forces over what results from prior-art designs. Additionally, because of the torsional flexibility inherent in elastomeric-belt springs input and output shafts need not be in strict alignment and the transmission means can perform equally as well as a flexible coupling.

Preferably, elastomeric-belt spring 16 is an oriented copolyetherester elastomer. Most preferably, the copolyetherester elastomer used to form the elastomeric-belt spring consists essentially of a multiplicity of recurring long-chain and short-chain ester units joined head-to-tail through ester linkages, said long-chain ester units being represented by the structure:

$$-OGO-\overset{O}{\overset{\|}{C}}R\overset{O}{\overset{\|}{C}}-$$

and said short-chain ester units being represented by the structure:

$$-ODO-\overset{O}{\overset{\|}{C}}R\overset{O}{\overset{\|}{C}}-.$$

wherein:

G is a divalent radical remaining after removal of terminal hydroxyl groups from poly(alkylene oxide) glycols having a molecular weight between about 400-6000, e.g., poly(tetramethylene oxide)glycol;

R is a divalent radical remaining after removal of carboxyl groups from a dicarboxylic acid having a molecular weight less than about 300, e.g., phthalic, terephthalic or isophthalic acids; and

D is a divalent radical remaining after removal of hydroxyl groups from a low molecular weight diol having a molecular weight less than about 250; said short-chain ester units constitute about 15-95% by weight of the copolyetherester and said long-chain ester units constitute the balance.

The copolyetheresters can be made conveniently by a conventional ester interchange reaction. A preferred procedure involves heating the dicarboxylic acid, e.g., dimethyl ester of

terephthalic acid, phthalic or isophthalic acid, with a long-chain glycol, e.g., poly(tetramethylene oxide)glycol having a molecular weight of about 600-2000 and a molar excess of diol, e.g., 1,4-butanediol, in the presence of a catalyst, e.g. tetrabutyl titanate, at about 150°-260°C and a pressure of 0.5 to 5 atmospheres, preferably ambient pressure, while distilling off methanol formed by the ester interchange. Thus, preferably, in the above formula G is the group remaining after removal of hydroxyl groups from poly(tetramethylene oxide)glycol having a molecular weight of about 600-2000; R is the group remaining after removal of carboxyl groups from phthalic, terephthalic or isophthalic acids or mixtures thereof, and D is the group remaining after removal of hydroxyl groups from 1,4-butanediol. At least about 1.1 mole of diol should be present for each mole of acid, preferably at least about 1.25 mole of diol for each mole of acid. The long-chain glycol should be present in the amount of about 0.0025 to 0.85 mole per mole of dicarboxylic acid, preferably 0.01 to 0.6 mole per mole of acid.

Preferred copolyesters are those prepared from dimethyl terephthalate, 1,4-butanediol, and poly(tetramethylene oxide)glycol having a molecular weight of about 600-2000 or poly(ethylene oxide)glycol having a molecular weight of about 600-1500. Optionally, up to about 30 mole percent and preferably 5-20 mole percent of the dimethyl terephthalate in these polymers can be replaced by dimethyl phthalate or dimethyl isophthalate. Other preferred copolyesters are those prepared from dimethyl terephthalate, 1,4-butanediol, and poly(propylene oxide)glycol, having a molecular

weight of about 600-1600. Up to 30 mole percent and preferably 10-25 mole percent of the dimethyl terephthalate can be replaced with dimethyl isophthalate or butanediol can be replaced with neopentyl glycol until up to about 30% and preferably 10-25% of the short-chain ester units are derived from neopentyl glycol in these poly(propylene oxide)glycol polymers.

The copolyetherester compositions may also contain up to about 5 weight percent of an antioxidant, e.g., between about 0.2 and 5 weight percent, preferably between about 0.5 and 3 weight percent. The most preferred antioxidants are diaryl amines such as 4,4'-bis(α,α-dimethylbenzyl) diphenylamine.

Elastomeric-belt springs 16 of oriented copolyetheresters can be formed in a number of ways. For example, a billet can be molded from the polymer in a conventional manner and the billet oriented by stretching, heat setting, and cooling to form a strap-like strip. The copolyetherester strip is oriented by stretching the polymer by at least 300% of its original length and preferably at least 400% at a temperature below its melting point by at least about 10°C. It is maintained at that length and brought to or maintained at a heat setting temperature between about 80°C and about 10°C below its melting point. It is then cooled to a temperature below the heat setting temperature by at least 55°C. This oriented strip product is then formed into a belt configuration by lap-winding a series of layers and sealing the ends to the adjacent layer or by sealing adjacent layers to each other.

Preferably, elastomeric-belt spring 16 is composed of two copolyetherester elastomers having different melting points. In the belt spring, the higher melting copolyetherester elastomer is in the form of a plurality of strands, tapes or films which are monoaxially oriented in the direction of their length, and the lower melting copolyetherester elastomer is bonded thereto in an unoriented form as a matrix surrounding the individual strands, tapes or films.

The elastomeric-belt spring can be formed by bringing the lower melting point copolyetherester elastomer and the oriented higher melting point copolyetherester elastomer together at a molding temperature below the melting point of the higher melting point copolyetherester elastomer and above that of the lower melting elastomer. The two elastomers are arranged in such a fashion during the layout of the belt-spring that when the lower melting point copolyetherester elastomer becomes fused in the heating step, it adheres adjacent units of the higher melting point oriented copolyetherester elastomer together.

The invention is well-suited to the transmission of torque, the cushion of torque upsets and the damping of torsional vibrations in power trains of any kind. Its capability for high rotations at full-torque transfer in minimum space with minimal flywheel effects, its lower friction loss for easier and less-biased return toward neutral on release of torque, and its free reversing capability for cushioning of shocks from either driver or driven sides make it suited for automotive use as the torque cushion and vibration absorber

between engine and transmission shaft. Such a cushion is needed with automatic transmissions if the torque converter is to be locked up, when not needed for acceleration purposes, to conserve fuel. Such a cushion is also needed in cars with manual transmissions to avoid the rattling of transmission gearing with clutch pedal out and transmission in neutral, and with all cars, especially with diesels, to obviate the highway speed problem of "chuggle", which is the occasional match-up of engine vibration frequency with the natural frequency of vibration of the body and chassis of the car.

CLAIMS

1. An improved elastic coupling for transmitting power from one shaft to another shaft comprising a driving shaft connected to a hub member and a driven shaft connected to a rim member both of which are operably connected by a plurality of radially-positioned two-ended loop elastomeric-belt springs each mounted on a pair of swing arms which are radially spaced apart from one another and one of which is pivotally mounted on said rim member and the other pivotally mounted on said hub member, each of said swing arms having elastomeric-belt spring support means on one end, at least one of said swing arm support means of each pair being eccentrically mounted on their respective rim member or hub member with respect to their swing arm pivot points and said pivot points being in fixed positions relative to the centerline of the driving and driven shafts.

2. An elastic coupling of Claim 1 wherein each pair of said swing arms has elastomeric-belt spring support means that are eccentrically mounted on the rim member and hub member.

3. An elastic coupling of Claim 1 wherein the pivot points comprise fulcrum-type pivots.

4. An elastic coupling of Claim 1 wherein the elastomeric-belt springs are made of a copolyetherester.

5. An elastic coupling of Claim 4 wherein the copolyetherester is oriented.

6. An elastic coupling of Claim 5 wherein the copolyetherester is derived from terephthalic acid or ester thereof, poly(alkylene oxide) glycol, and aliphatic diol.

FIG. 1 (Prior Art)

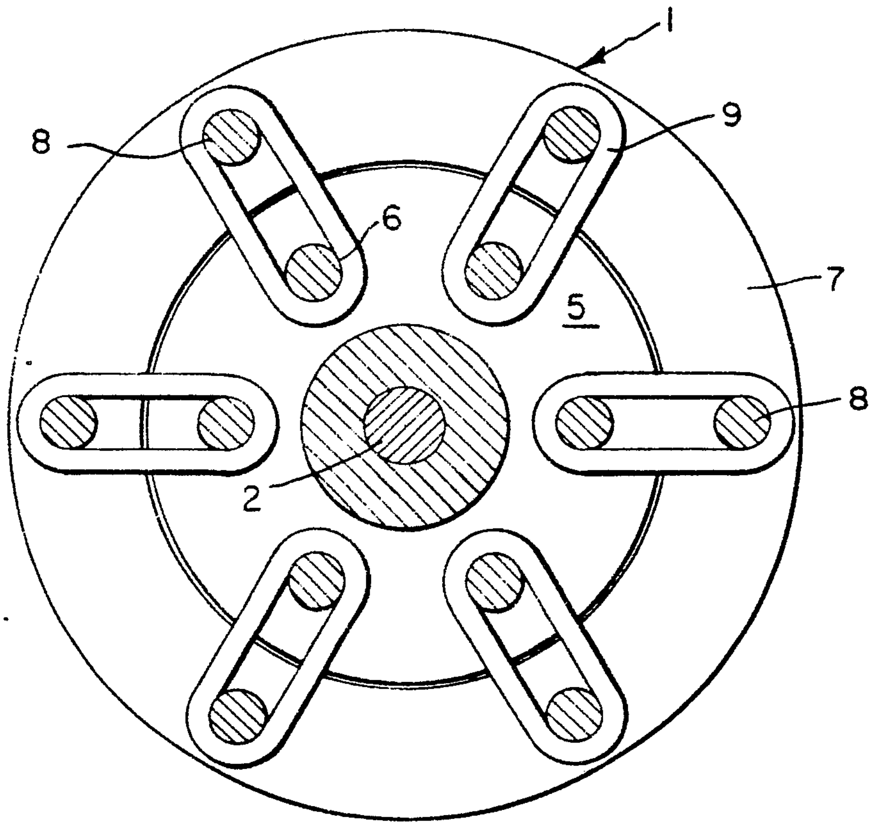


FIG. 2 (Prior Art)

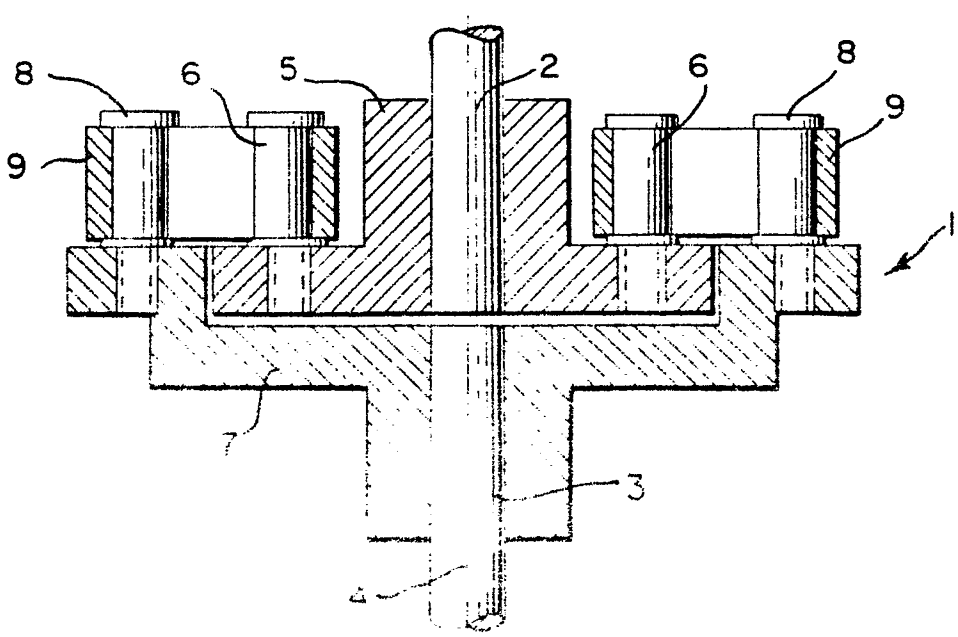

FIG. 3

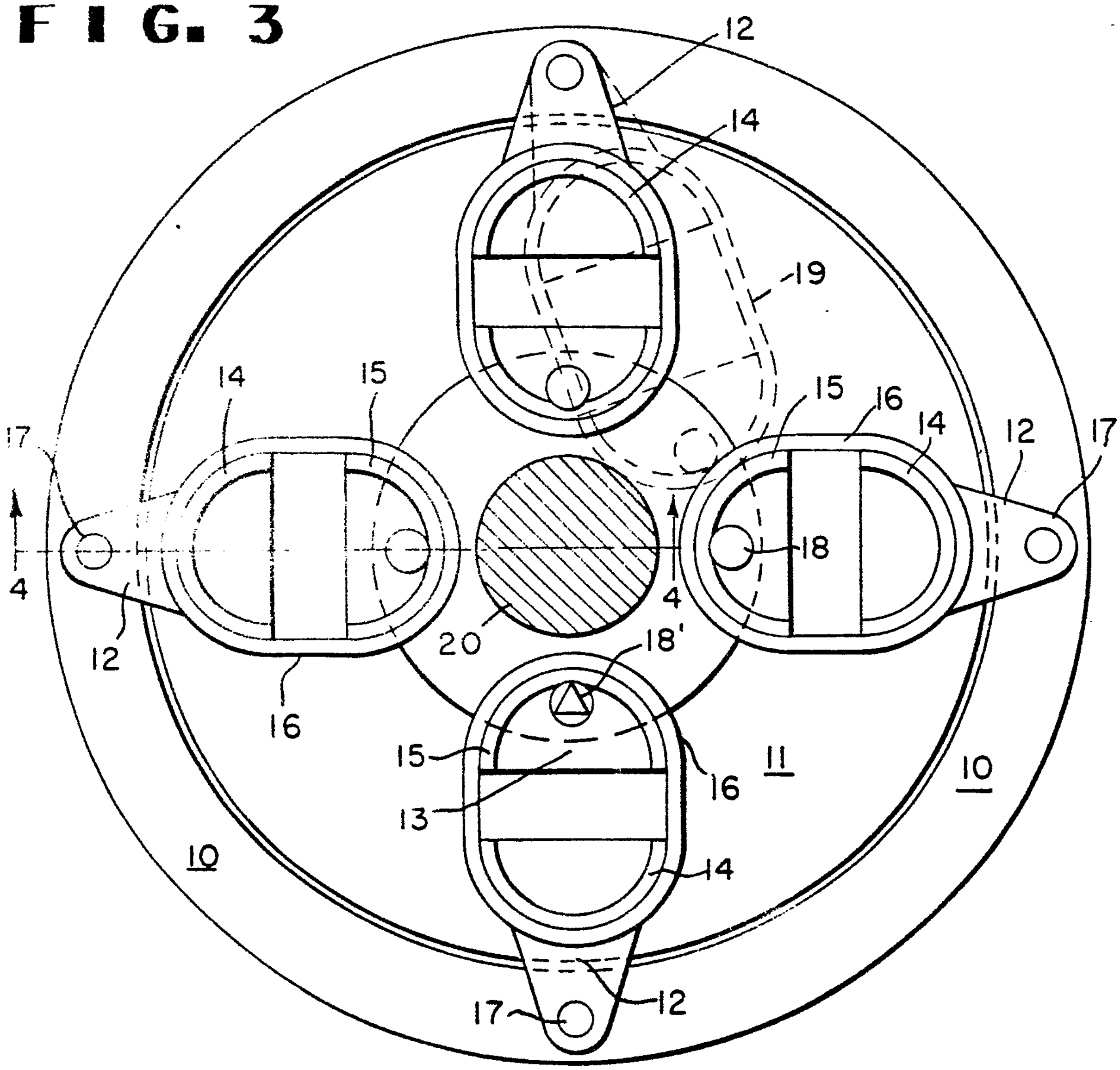
12
14
19
14
15
15
16
14
12
17
17
4
4
18
20
18'
12
16
15
16
11
10
13
10
14
12
17

FIG. 4

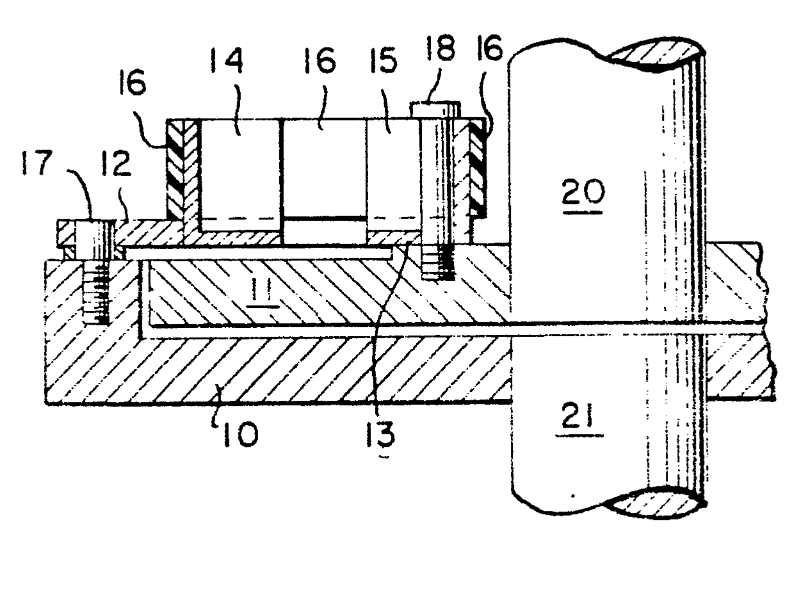
16
14
16
15
18
16
17
12
20
11
10
13
21